# EUROPEAN PATENT APPLICATION

(11) **EP 2 390 790 A1**
(43) Date of publication of application: **30.11.2011**
(21) Application number: 10164180.1
(22) Date of filing: 27.05.2010
(51) Int. Cl.: G06F 11/36

(54) **Profiling of software applications**

(71) Applicant: FUJITSU LIMITED, Kawasaki-shi, Kanagawa 211-8588 (JP)
(72) Inventor: Wilson, Nicholas, Hayes, Middlesex UB4 8FE (GB)
(74) Representative: Stebbing, Timothy Charles

(57) **Abstract**

A method of profiling a software application made up of hierarchically-arranged modules or functions, is an iterative process of compilation with profiling hooks (ST20) of only a selected subset of the functions. The process successively adds in to the subset functions at different hierarchical levels in a call graph, performs profiling on just these functions (ST22, ST24) and weeds out unnecessary functions (ST26, ST28) to leave a subset of the most critical functions for further profiling and/or optimization.

## Description

The present invention relates to profiling of large complex software applications.

Modern software applications are highly complex with many interacting modules. One example of an Ocean Modelling application and its associated libraries consists of 31,810 functions. As software applications become increasingly large and complex, ensuring that applications run as quickly and efficiently as possible (called "optimization") becomes increasingly important. "Profiling" refers to techniques for assisting optimization by determining which parts of the application consume most resources, such as time and memory space. In particular, bottlenecks may be identified which might be capable of improvement by rewriting code, moving a block of code within memory or rearranging the order of execution of parts of the software application.

Profiling involves running the software application under a set of typical input conditions to represent normal usage of the application. As the application runs, data is collected in some way. There are two main methods for software profiling: sampling and instrumentation. Sampling gathers statistical information by interrupting the application at regular intervals and examining the call stack, providing a snapshot of which part of the code is currently executing at each interval. This technique requires relatively little additional processing overhead, but becomes less accurate as the sampling interval is lengthened. Instrumentation adds source code to the application called "profiling hooks" which record when the application enters and leaves a function. Instrumentation provides better information than sampling, such as the exact number of calls made to a function, but causes additional processing overhead, slowing down the overall execution of the software application and possibly altering the timing relationships between parts of the application. In addition it produces more data and so cannot be used for all functions in a large application. A software application to which instrumentation has been added in this way is called an "instrumented" application.

Typically, a large software application is made up of a large number of interacting parts or "functions" (these may also be called "modules", "routines", subroutines, or code blocks, depending on the context). Thus, the changes caused by instrumentation, and the sheer amount of data produced, can cause a problem if instrumentation is applied to all functions in such a large application.

In a large software application, functions will have a hierarchical structure in which some functions take on higher-level tasks whilst depending on lower-level functions for specific tasks. At the top of the hierarchy exists a main function where the application starts and ends. Execution of the application is normally initiated by a user giving a command via an operating system. During execution of the application, one function calls another function which can either call a further function or return execution back to the calling function. At the end of the application the main function returns control back to the operating system.

One way to view the hierarchical levels within such a structure is in terms of the number of function calls from the main function. Thus, labelling the level of the main function S0 as Level 0, a function capable of being called directly from S0, in other words a single function call away, would be Level-1, a function two function calls away would be Level-2, and so on.

The additional instructions inserted as instrumentation cause a record to be made each time execution reaches them. Typically, such instructions are added at entry and exit points of modules or functions. In this way, instrumentation can provide a record of which functions are called at which times and what proportion of the total run time is spent in each function. Such a record has to be presented in some way for human analysis. One way to present such a record is as a table, listing functions and the respective amounts of time spent in executing each function.

Another way is using a "call graph", which graphically displays functions as nodes in a tree-like structure, the lines (or "edges") joining the nodes representing the calls between functions. A function which calls another function is referred to as the "caller" and that other function is the "callee", also often referred to as a "child" of the "parent" caller function. Generally, functions higher in the tree (in other words at a higher level in the hierarchy) make calls to functions lower down in the tree (at a lower level). However, functions may interact in complex ways, with calls from lower to higher levels or functions even calling themselves, so that a parent-child relationship is not always clear.

The datasets used in scientific simulations are typically very large and run for an extended period of time (a large simulation can run for hours in parallel on hundreds of CPUs). This leads to two issues when performing application profiling on massively parallel applications.
(i) Large amounts of data are produced.
(ii) The overhead caused by profiling can distort timings.

When instrumented profiling is applied to all functions in a large application the amount of data produced is unmanageable, and/or the additional processing overhead will make the results of profiling meaningless. The typical solution is to manually apply profiling only for selected parts of an application. This is a time consuming process which must be performed by a person familiar with application profiling techniques.

There is consequently a need for automatically performing instrumented profiling only on the important subset of functions within an application.

US2008/282232 discloses a mechanism to reduce the amount of data produced by profiling using sampling techniques, by varying the sampling rate to target important sections of the application. However, by their nature, sampling techniques tend to be less precise or targeted than instrumented profiling.

As mentioned, large software applications are difficult to profile due to the number of functions involved and the amount of data produced. This invention outlines a mechanism to automate and streamline the process of instrumented profiling by removing the need for time consuming human intervention.

According to a first aspect of the present invention, there is provided a method of profiling a software application, the software application comprising a plurality of functions including a main function with calls being made between functions in a hierarchical manner, the method including the steps of:
(a) classifying each of the plurality of functions into one of a plurality of levels including at least a highest and a lowest level, according to its minimum number of call steps from the main function;
(b) starting with the highest level, defining a subset of the functions at the current level;
(c) adding profiling code to, or enabling profiling code of, the subset of functions and executing the software application to produce profiling data;
(d) reducing the subset by removing one or more of the functions on the basis of the profiling data;
(e) marking functions, called by the functions removed in step (d), as rejected functions; and
(f) until a predetermined level is reached, adding, to the reduced subset, functions from the next level below the current level other than rejected functions and repeating steps (c), (d) and (e).

The above process can be performed automatically without human intervention. Thus, an embodiment of the present invention can provide an automated technique for targeting those parts of the software application to be profiled via instrumentation.

Here, step (a) may further comprise determining, at least notionally, a call graph of the plurality of functions, and step (d) may further comprise deleting the removed functions and rejected functions from the call graph, so that the result after performing step (f) for the last time is an optimised profiling call graph.

Preferably, the functions are in the form of compilable code, allowing the profiling code to be added in a compiler or pre-processor. Alternatively, profiling code provided for all functions may be selectively enabled/disabled to profile only the desired subset of functions.

Preferably also there is a step, prior to step (a), of selecting a profiling metric and executing the software application without profiling code to establish a baseline value of the selected metric.

In that case, step (d) preferably involves removing functions on the basis of whether or not the associated profiling data fulfils a predetermined condition with respect to the profiling metric.

This can include ranking the profiled functions in accordance with the profiling metric, with the predetermined condition being a given fraction of the baseline value. Preferably, the metric is at least one of execution time, memory, disk usage and a metric based on hardware counters.

The predetermined level, at which execution of the process completes, is preferably the lowest level. Alternatively, the process may be halted when a target number or fraction of functions has been rejected or removed.

In the event of producing an optimised profiling call graph, this is preferably displayed to a user. The results may be employed for automatically or manually optimising code of the functions contained in the subset obtained when the predetermined level is reached.

According to a second aspect of the present invention, there is provided an apparatus for automatically profiling a software application, the software application comprising a plurality of functions including a main function with calls being made between functions in a hierarchical manner, the apparatus including:
a code analysis unit arranged to classify each of the plurality of functions into one of a plurality of levels including at least a highest and a lowest level, according to its minimum number of call steps from the main function;
a function storage unit arranged to record a subset of the functions at the current level;
an instrumentation unit arranged to add or enable profiling code for each of the subset of functions;
an execution unit arranged to executing the software application to produce profiling data;
a profile data storage unit for holding profiling data generated by the execution unit;
a function selection unit arranged for instructing the function storage unit to delete functions on the basis of the profiling data, and to record functions from the next level below the current level except for any such functions called by functions just deleted;
wherein the instrumentation unit, execution unit, profile data storage unit and function selection unit are configured to operate repeatedly until reaching a predetermined level.

According to a third aspect of the present invention, there is provided computer-readable code which, when execute by a processor of a computer system, causes the computer system to profile a software application, comprising a plurality of functions including a main function with calls being made between functions in a hierarchical manner, by a process including the steps of:
(a) classifying each of the plurality of functions into one of a plurality of levels including at least a highest and a lowest level, according to its minimum number of call steps from the main function;
(b) starting with the highest level, defining a subset of the functions at the current level;
(c) adding or enabling profiling code in the subset of functions and executing the software application to produce profiling data;
(d) removing one or more of the functions from the subset on the basis of the profiling data;
(e) marking functions, called by the functions removed in step (d), as rejected functions; and
(f) until a predetermined level is reached, adding, to the reduced subset, functions from the next level below the current level other than rejected functions and then repeating steps (c), (d) and (e).

Reference is made, by way of example only, to the accompanying drawings in which:
Figure 1 is a schematic block diagram of a computer system for compiling and instrumenting a software application to produce profiling data in a known manner;
Figure 2 is a flowchart of a method of the invention;
Figure 3 is a call graph diagram showing a complete call graph of an example software application with the functions ranked;
Figure 4 is a diagram of an intermediate call graph representing the method of the invention part way through its processing;
Figure 5 is a diagram of a final call graph containing only those functions which are important for profiling;
Figure 6 illustrates possible relationships between functions at different levels;
Figure 7 shows call graphs and execution times at various iterations in the method of the invention; and
Figure 8 schematically shows an apparatus for performing the method of the invention.

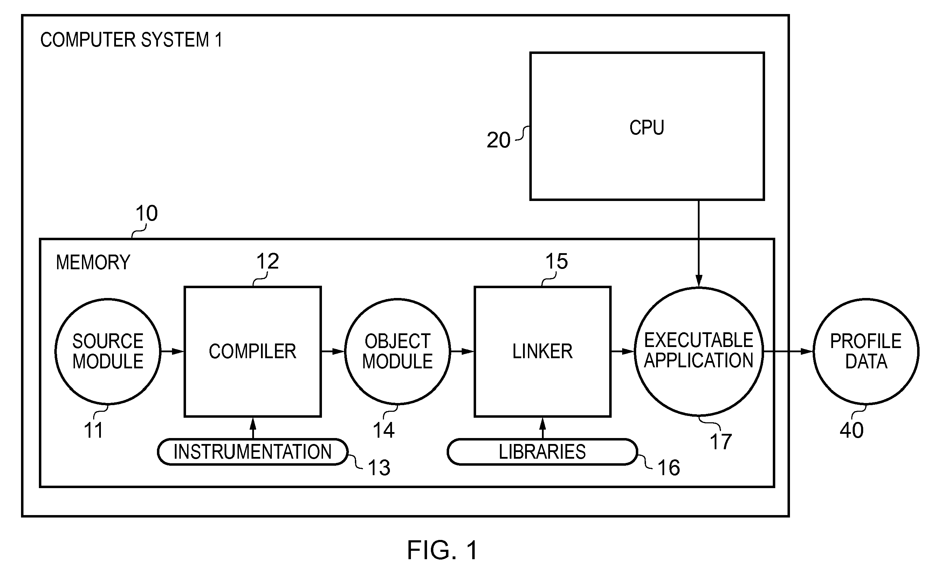

Turning now to Figure 1, this illustrates in schematic form the processes involved in compiling and instrumenting a software application (henceforth called simply a "program") according to a known technique. A computer system 1 has memory 10 storing the program (usually in the form of hard disk storage in addition to solid-state memory) and a CPU 10 for executing the instructions within the program. A single CPU is shown for simplicity, but in practice a large software application may run in parallel on hundreds or thousands of CPUs.

As already mentioned, the program is made up of many functions or modules. Each of these is generally written in a high-level language (source code) which is easy for a human programmer to understand. Before it can be executed by a CPU 20 of the computer system 1, each source module 11 is compiled in compiler 12, into a machine level language (object code) which is understood by the CPU 10 (an intermediate stage may be involved, but is omitted here for simplicity). To instrument the module, instrumentation 13 in the form of additional instructions (hooks) is generally applied at this compilation stage, though it may be introduced earlier (pre-processing prior to compilation) or later (by modification of the object code).

The resulting object module 14 will be one of many such modules which need to interact to perform the function of the program. A linker 15 is used to link together the object modules, and to add low-level functions by linking-in libraries 16 of standard code. (An example of this would be the low-level functionality of allocating memory in the C programming language: this is provided by malloc () and related functions which is provided by a library, linked into the executable). The libraries themselves may be provided with profiling hooks.

The result is the program in the form of an executable application 17. By executing the machine-level instructions contained in this executable, the CPU runs the program and produces some results. In particular, an instrumented program yields profile data 40 as the instrumentation code monitors calls among the various functions.

As indicated above, there is a balance between accounting for as much of the profiling metric as possible and generating too much information. Typically this is dealt with by hand by manually selecting regions of the program to profile using prior knowledge of the application which can be laborious and time consuming.

The method embodying the invention, to be described, is concerned with how to automatically choose the optimal set of functions to profile. It is an iterative process which successively adds in functions at different hierarchical levels in a call graph, and weeds out unnecessary functions to leave a subset of the most critical functions for profiling.

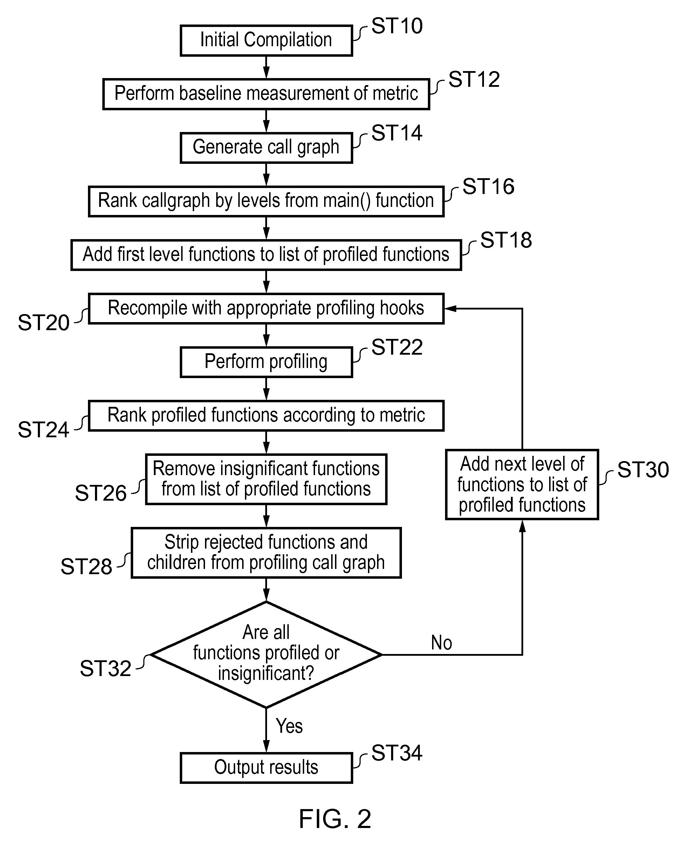

The flow chart in Figure 2 shows an outline of the process used to generate the optimal set of functions to profile. It is assumed that the process starts with an uninstrumented program. Starting conditions include selecting a "profiling metric" to be used in the method. This is some parameter used as a criterion for deciding which functions to include or exclude form consideration. Typically, the profiling metric will be time, or more particularly the time occupied by execution of each function (along with its child or callee functions). However, there are other possible profiling metrics as explained later. Reference will be made to a "profiling apparatus" which is operated by a user to perform some of the steps to be enumerated. This could be a computer distinct from that used to execute the program, or more typically, the executing computer itself, such as the computer system 1 of Figure 1. Thus, a general-purpose computer is capable of acting as the profiling apparatus including a code analysis unit, function storage unit, instrumentation unit, execution unit, profile data storage unit and function selection unit as claimed.

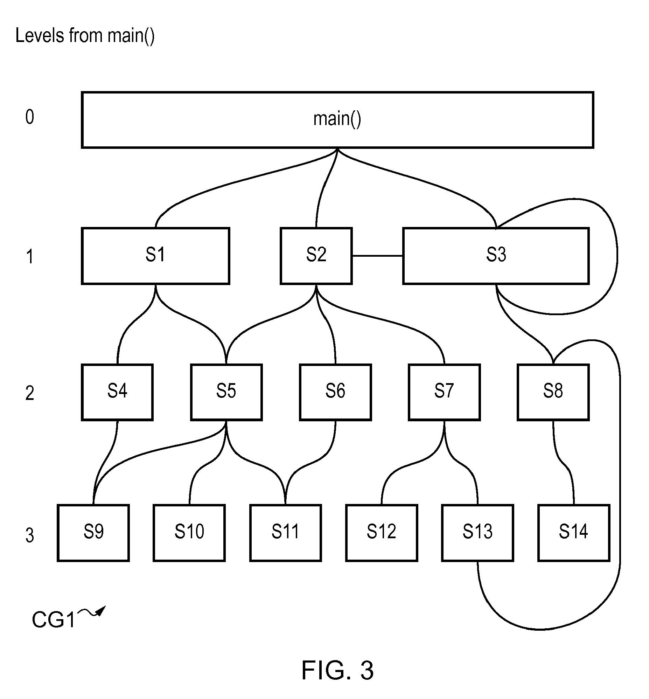

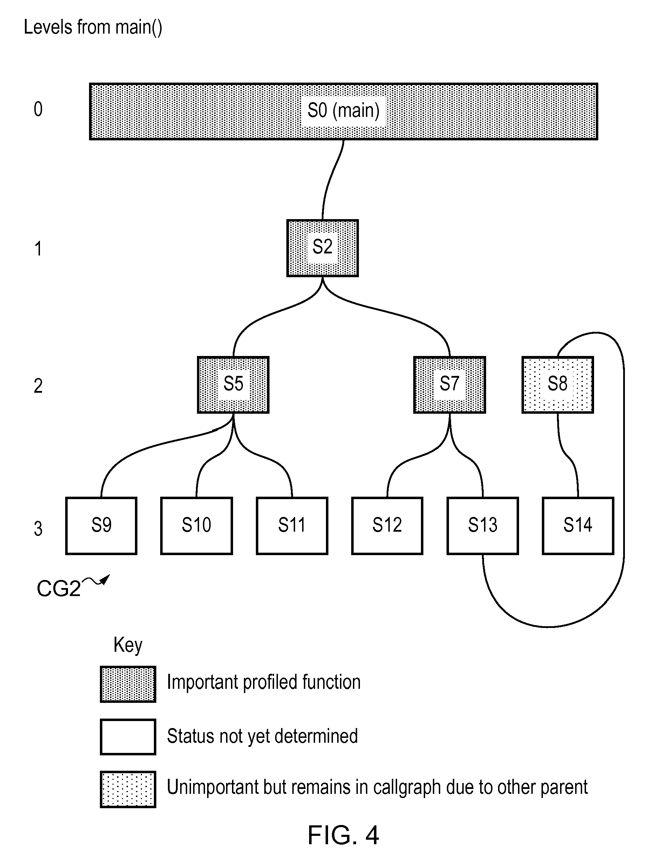

The method embodying the present invention includes the following steps:
ST10. Compile the program without profiling. This allows the uninstrumented program to be executed normally by the executing computer.
ST12. Determine a baseline value for the profiling metric under consideration, based on executing the uninstrumented program. As mentioned, the profiling metric would typically be time, in which case the baseline value would be the total time the program takes when no profiling is taking place. The baseline value (or a percentage thereof) is used as a threshold for later selection of functions.
ST14. Determine a call graph by analysing the executable. This results in a call graph like CG1 shown Figure 3, showing all the functions and their calling relationships. Figure 3 shows a greatly simplified example in which the functions are ranked into levels according to the number of call steps from the main() function. This call graph will be overcomplete because not all call paths will be followed during execution. This kind of call graph is also referred to as a "static call graph".
ST16. Rank functions into levels according to the number of call steps from the main() function. In terms of the call graph, this may also be expressed as how many edges away the function is from the main function. As shown in Figure 3, the main function S0 or () heads the call graph CG1 and execution starts and ends here. The main function occupies level-0 in Figure 3. Functions called directly by S0 (i.e. the callee functions of S0) form level-1. Functions which are called by those in the first level make up level-2, and so on. Level-2 is called the next level of level-1, and so on.
   Where a function is called by two or more higher-level functions, its level is determined by the minimum number of calls away from the main function. As an example, function S8 in Fig. 3 has two possible paths for being called:
   Path 1:S0->S3->S8
   Path 2: SO->S2->S7->S13->S8
S8 is shown at level-2 in the call graph of Figure 3 because the minimum number of calls away from level-0 is two.
ST18. Add first level functions to the list of profiled functions. In other words, a list or set (also called "subset" below) of functions is created containing, in this first iteration, all the functions in level-1 (these are S1, S2 and S3 in Figure 3). Level-1 becomes the "current level" being considered by the process.
ST20. Recompile the program with appropriate profiling hooks. That is, instrumentation code is added to (or enabled for - see below) only those functions in the list. The instrumented profiling will be performed using automatic insertion of profiling hooks either by the compiler 12 in Figure 1, or by a pre-processor which modifies the source code prior to compilation, to handle system-dependent issues or enable/disable special features.
ST22. Run the program so recompiled and collect profiling data. This profiling data is of course confined to the functions in the list, and is therefore relatively manageable in size, and less impacting on overall program execution.
ST24. Rank profiled functions according to the profiling metric. Taking time as an example, the functions in the list are arranged in ascending order of execution time (time occupied by executing those functions and their callee or "child" functions).
ST26. Remove ("weed out") smallest functions until a threshold percentage of the metric is reached. That is, the list is reduced by taking out any functions accounting for less than a given fraction of the metric, for example for less than say 5% of the occupied time. These are called "removed functions" below. In addition, find the functions called solely by these removed functions and mark them as to be ignored from further consideration. These are called "rejected functions" below.
ST28. Strip out the removed functions and rejected functions from the profiling call graph. In other words the call graph (whether actually displayed to a user, or existing only notionally in the profiling apparatus) is updated by including only the functions remaining after ST26. It is important to note that this strips out, as well as the functions removed from the current level, some lower level functions which are rejected on the basis that they are only called by one or more of the removed functions. That is, removing functions at the current level allows the levels below to be recalculated, and any "orphan" functions which no longer have a path to the main function to be removed.
   The reason for this is that the profiling overhead is proportional to the number of instrumentation calls performed, and so lots of short-duration function calls have a large effect on the overhead without accounting for much of the profiling metric. The result is a reduced call graph similar to that of Figure 4 (which shows a later stage of the process).
ST30. Add the next level of functions to the list of profiled functions. Thus, in the first iteration, the functions remaining in level-2 would be added to the level-1 functions still in the list.
ST32. Repeat steps ST20 to ST 28 until all functions are either profiled or ignored (removed/rejected), or until a predetermined level is reached. In the simple example of Figure 3, two iterations are sufficient to reach the lowest level in the hierarchy, level-3 of CG1. In general it will always be preferable to continue the process down to the lowest level. However, in a large and complex real-world example, there may be many levels in the call graph and to reduce the time and effort involved, profiling could be confined to a predetermined number of the higher levels, perhaps in order to obtain a rough overview prior to further work. The predetermined level may be the level at which a desired number or proportion of the functions has been eliminated (rejected or removed).

Figure 4 shows an updated call graph CG2 as an example of how the profiling call graph could look after the first two levels have been profiled. Note that S2 is the sole remaining level-1 function in this simple example. Functions S1 and S3 along with S4, a child of S1, have been removed in the first iteration of step ST28 above. In addition, function S6 has been removed at the second iteration.

A third level-2 function S8 remains because it is a callee of a lower function S14, and thus not simply the child of S3 (refer back to Figure 3). Consequently it was not removed in the first iteration of step 9, even though S3 was removed at that stage.

As the end result of the process, the profiling apparatus yields a subset of the functions which is optimised in the sense that it contains only those functions most critical for profiling, i.e. of most interest with respect to the profiling metric. In other words the purpose of the method is, rather than taking profiling of all functions as a starting point, to start with no profiling and then add in profiling which captures the important features without unacceptably distorting the timings.

Although the iterative process described above takes some time, it enables profiling data to be obtained for the most critical functions without ever having collected profiling data for all functions. It is also possible to perform the process by profiling execution of the program on a limited or test basis (e.g. with a relatively small test dataset), instead of performing a full execution possibly taking many hours or days. It should also be noted that, once the starting conditions such as profiling metric have been set, the process can be left to proceed automatically without human intervention.

The subset of functions produced automatically in this way may of course be revised by a human user, but even if so, the burden on the user is very much reduced compared with the task of manually selecting regions of code to be profiled/optimised.

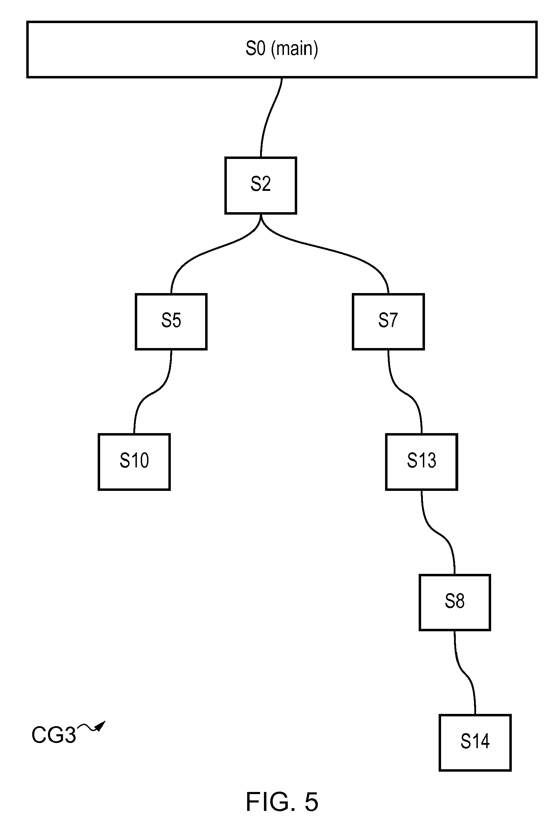

Figure 5 shows an example of a final optimised profiling call graph. Note that it includes, in addition to the main function S0, only 7 of the fourteen functions S1 - S14. Depending on the metric, its baseline value and threshold used, more or fewer functions can be stripped out by the process of the invention. Thus, rather than rejecting half of the original functions as in this simple example, 90% or more might be rejected. The proportion of functions to be excluded may be determined in advance and the starting conditions, and/or the level at which to terminate the process, varied appropriately to achieve the desired result. The subset of functions may be subjected to further or more intensive profiling, or may be directly targeted for optimisation techniques such as manual reconfiguration or recompilation by a special optimising compiler.

Figure 5 also illustrates how a function's level may change as the process proceeds. In other words the call graph is not fixed but is reformed at each iteration. As can be seen, S8 referred to earlier has moved level. Recall that if a function is called by two or more higher-level functions, its level is determined by the minimum number of calls away from the main function. As shown in Figure 3, S8 was originally at level-2 (SO->S3->S8). However, this path was removed when S3 was rejected. This means that S8 has moved from level 2 in CG1 to level 4 in CG3 (by virtue of the call path SO->S2->S7->S13->S8).

It is important to account for the metric correctly at each level, and also to know where the profiling overheads are coming from at each level so that the appropriate functions. are rejected. That means that if a function is in multiple levels then there needs to be two instances of the function, one with instrumentation and one without. The instrumented function is called from functions in the profiling call graph, and the normal function is called by functions which have not been instrumented.

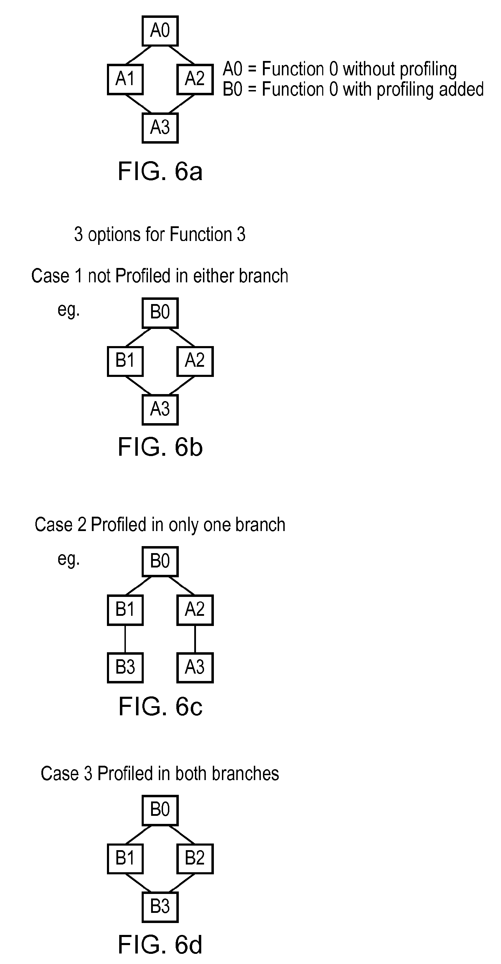

To explain this point further, Figure 6 illustrates the different cases in which a function (labelled 3) may be called by functions at higher levels. In the Figure, "A" represents a function which is not profiled (i.e. which lacks instrumentation code or for which any such code is disabled), and "B" represents a function with profiling added/enabled. (This A/B labelling is used here as an alternative to omitting functions from the call graph). As shown in Figure 6(a), function 3 is assumed to begin in an unprofiled state as unprofiled function A3, and is called by two higher-level functions 1 and 2, which in turn are called by a highest-level function.

Suppose that, as shown in Figure 6(b) to (d), the highest level function is profiled, i.e. included in the set to be considered as B0. There are two alternative branches from B0 to function 3, and three possibilities for profiling function 3, as follows:-
(i) it is not profiled in either branch, as shown in Figure 6(b).
(ii) it is profiled in one branch, but not in the other as shown in Figure 6(c). In this case it is necessary to maintain two instances of function 3, one profiled (B3) and one not (A3).
(iii) it is profiled in both branches as shown in Figure 6(d). In this case there is a single instrumented copy B3 of the function.

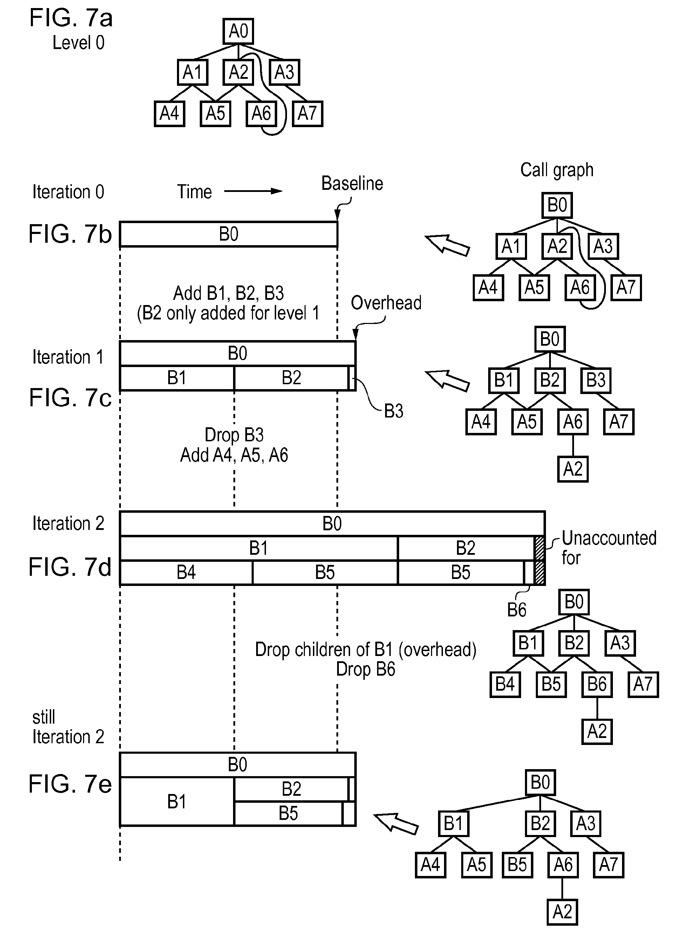

Figure 7 illustrates call graphs at different iterations of the process along with an indication of execution time. As in Figure 6, "A" denotes unprofiled functions, and "B" profiled functions.

Suppose the application has eight functions A0 to A7 with the call graph shown in Figure 7(a). At the initial step, the application is run without any instrumentation as already described, to provide a baseline value of the profiling metric (in this case, time). This is shown as "Iteration 0" in Figure 7(b).

Next, the level-1 functions (B1, B2 and B3) are added to the set being considered; in other words instrumentation is added/enabled for these functions. Note that function B2 is added only for level 1. In other words, the function call from A6 back up to function 2 is accounted for by a second lower-level instance of this function, A2, as depicted in the modified call graph at the right-hand side of Figure 7(c). The application is run again (iteration 1) and the execution time becomes a little longer due to the profiling overhead, as shown in the left-hand portion of Figure 7(c).

At this point, function B3 is dropped as it accounts for only a small part of the execution time (indicated at the extreme right-hand portion of the lower time bar in Figure 7(c). Function A7 can then be ignored as it is called only by B3.

The remaining next-level functions A4, A5 and A6 are added to the set (becoming B4, B5 and B6) and Iteration 2 is run (Figure 7(d)). Note the relatively long execution time in this case. Between Iteration 1 (Figure 7(c)) and Iteration 2 (Figure 7(d)) the overhead due to the profiling has increased above an acceptable level. Examining the change in time reported for the Level 1 functions (B1 and B2) it can be seen that this is due to the children of B1. Consequently, in addition to B6, the function B4, which is called only by B1, is also dropped. The function B5 which is called from functions B1 and B2 is dropped when called by B1 but remains when called by B2. The reduced set of functions with a more manageable execution time (still at iteration 2) is shown in Figure 7(e), along with the relabelled call graph.

### Profiling Metrics

There are many profiling metrics which can be used to measure the performance of an application. The main requirement for this mechanism is that the value of the metric for a particular function includes the values for all the child functions called by the parent.

Elapsed Time: the time spent in a function is the most commonly used performance metric.
Memory: the amount of memory allocated is also an important metric. However details of memory allocated in child functions is not available to the parent function.
   To deal with this, it is necessary to link the application using an alternative system library in which malloc() or any equivalent functions updated a shared counter whenever they allocated memory. The value of this counter would then be accessed when the application enters and leaves a function to determine the amount of memory allocated by the parent function and any child functions.
Disk Usage: the amount of data read and written to disk affects performance. This can be measured using an equivalent procedure to that outlined for measuring memory usage.
Hardware Counters: hardware performance counters measure useful profiling information such as instruction counts, cache misses and TLB misses. These counters can be used as the profiling metric by recording the value when entering and leaving a function.

As is apparent from the above, some metrics depend on factors outside the program itself and therefore require profiling hooks outside the executable per se, either in libraries or possibly at an operating system level to capture disk accesses.

It will be noted that the above metrics are inter-related to some extent, often in inverse relationship to one another. Thus, for example, a function coded to run very fast may occupy a lot of memory. Or, a function written to keep memory usage low may need a lot of disk accesses. Consequently, the end results of the process will differ depending on the metric being used. It is possible for the method of the invention to be repeated with different metrics and the respective results to be compared to refine the subset of functions. For example, a superset of functions may be formed, combining the functions identified for each individual metric. In this way, optimisation can be performed balancing the needs of two or more metrics.

The results of performing the method of the invention will also depend, in general, on the hardware configuration of the computer system running the program. However, this is no different from the normal situation in profiling, where the goal of optimisation is often to optimise a program (perhaps written originally for a different hardware architecture or even in a different language) to run well on a particular system.
Thus, an embodiment of the present invention may perform application profiling whilst satisfying the following conditions.

Determine functions which account for a high percentage of a particular metric such as elapsed time.

Determine call graph for those functions.

Minimise the profiling time distortion.

Minimise the amount of profiling data.

Work without human intervention.

Various modifications are possible within the scope of the present invention.

In the above description, profiling code is added by a compiler or pre-processor before compilation. However, instrumentation can also be added to object code. This modification requires altering step ST20 described above, "Recompile with appropriate profiling hooks", to "Perform binary instrumentation to add/remove profiling hooks".

Another modification involves providing profiling hooks for all functions in advance, for example during compilation, which are then selectively enabled/disabled at run time. A related technique is the subject of US Patent 5,960,198 assigned to IBM Corporation. Disabling profiling hooks in this case is equivalent to removing functions from the list, and enabling profiling hooks adds the corresponding functions to the list. Thus, in this instance, the above steps ST20 and ST22 would be replaced by a single step of "Run the program with selected profiling hooks enabled or disabled".

Instead of or in addition to specifying a threshold based on the profiling metric, a target number of functions, to be included in the final subset, may be set.

The above explanation refers to a threshold percentage of the profiling metric. This might not always be essential and more generally it would be possible to weed out functions which meet (or fail to meet) any predetermined criterion with respect to the metric.

Although references have been made to "call graphs", there is no need for actual call graphs to be displayed to a user. The call graphs may exist only notionally, or only by implication, within the profiling apparatus. Also, there is no need for the profiling apparatus to derive the complete call graph CG1 of Figure 3, which is included only as an aid to understanding. The apparatus may simply calculate the information needed for the next iteration of the process, in other words just those functions called directly by the functions selected so far, without being aware of functions at still lower levels as yet unexplored.

As mentioned, the apparatus used to perform the method of the invention may be the same computer system as used to run the program itself, or a separate computer. In either case, the invention may be embodied in computer-readable code. Such code may be stored on a computer-readable medium.

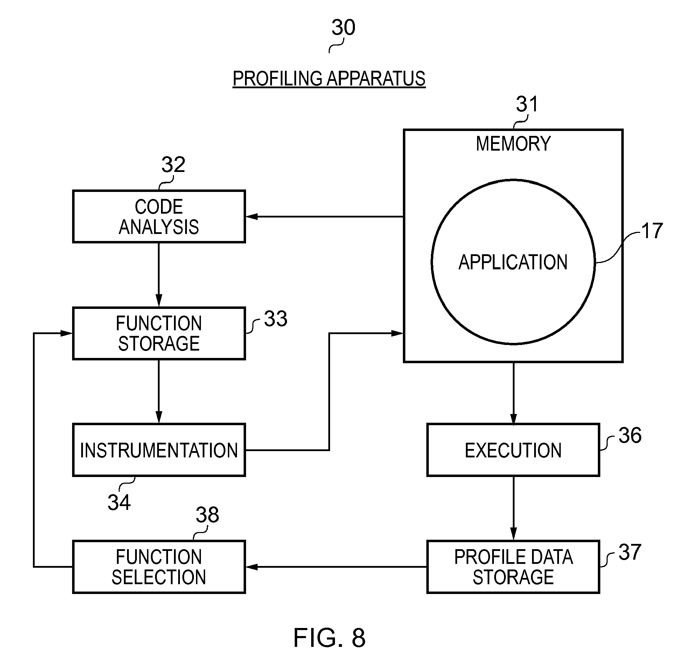

As an example, Figure 8 shows schematically an apparatus for performing the method of the invention. In practice, this apparatus will take the form of a general-purpose computer system for running the application and additionally programmed to provide the specific units or sections illustrated here.

The application 17 is held in a memory 31, such as a hard disk-array of a large-scale computer system. A code analysis unit 32 examines the application code to classify the constituent functions in the application by level, from highest (SO) to lowest.

A function storage unit 33 records in some way a current subset of the functions under consideration (that is, functions at a given level as already mentioned). This may be achieved by storing a pointer or ID of each function rather than the respective blocks of code themselves.

An instrumentation unit 34 adds or enables profiling code for each of the functions in the current subset, using one of the techniques mentioned above, and applies this to the stored application 17.

An execution unit 36 runs the application including the profiling code currently added/enabled, thereby yielding profiling data for the current subset of functions. This profiling data is stored in a profile data storage unit 37.

The results of the profiling data are made available to a function selection unit 38, which on the basis of the chosen profiling metric (see above), decides upon functions to be removed from consideration.

The function storage unit 33 updates the subset of functions by deleting functions identified as ones to be ignored by the function selection unit 38, and adding functions from the next level using information provided by the code analysis unit 32. The process of instrumentation, execution and analysis of profiling data is then repeated in the manner already explained.

## Claims

1. A method of profiling a software application, the software application comprising a plurality of functions including a main function with calls being made between functions in a hierarchical manner, the method including the steps of:
(a) classifying each of the plurality of functions into one of a plurality of levels including at least a highest and a lowest level, according to its minimum number of call steps from the main function;
(b) starting with the highest level, defining a subset of the functions at the current level;
(c) adding profiling code to or enabling profiling code in the subset of functions and executing the software application to produce profiling data;
(d) reducing the subset by removing one or more of the functions on the basis of the profiling data;
(e) marking functions, called by the functions removed in step (d), as rejected functions; and
(f) until a predetermined level is reached, adding, to the reduced subset, functions from the next level below the current level other than rejected functions and repeating steps (c), (d) and (e).

2. The method according to claim 1, wherein step (a) further comprises determining a call graph of the plurality of functions, and step (d) further comprises deleting the removed functions and rejected functions from the call graph, so that the result after performing step (f) for the last time is an optimised profiling call graph.

3. The method according to claim 1 or 2 wherein the functions are in the form of compilable code.

4. The method according to claim 3 wherein step (c) adds the profiling code during or prior to a process of compiling each function.

5. The method according to claim 3 wherein step (c) enables profiling code already provided for the functions.

6. The method according to any preceding claim further comprising a step, prior to step (a), of selecting a profiling metric and executing the software application without profiling code to establish a baseline value of the selected metric.

7. The method according to claim 6 wherein step (d) involves removing functions on the basis of whether or not the associated profiling data fulfils a predetermined condition with respect to the profiling metric.

8. The method according to claim 7 wherein step (d) involves ranking the profiled functions in accordance with the profiling metric, and the predetermined condition is a given fraction of the baseline value.

9. The method according to claim 8 wherein the metric is at least one of execution time, memory, disk usage and a metric based on hardware counters.

10. The method according to any preceding claim wherein the predetermined level is the lowest level.

11. The method according to any of claims 1 to 9 wherein the predetermined level is one at which a target number or fraction of functions has been rejected or removed.

12. The method according to claim 2, or any claim as dependent on claim 2, further comprising a step of displaying the optimised call graph to a user.

13. The method according to any preceding claim further comprising a step of optimising code of the functions contained in the subset obtained when the predetermined level is reached.

14. An apparatus for automatically profiling a software application, the software application comprising a plurality of functions including a main function with calls being made between functions in a hierarchical manner, the apparatus including:
a code analysis unit arranged to classify each of the plurality of functions into one of a plurality of levels including at least a highest and a lowest level, according to its minimum number of call steps from the main function;
a function storage unit arranged to record a subset of the functions at the current level;
an instrumentation unit arranged to add or enable profiling code for each of the subset of functions;
an execution unit arranged to executing the software application to produce profiling data;
a profile data storage unit for holding profiling data generated by the execution unit;
a function selection unit arranged for instructing the function storage unit to delete functions on the basis of the profiling data, and to record functions from the next level below the current level except for any such functions called by functions just deleted;
wherein the instrumentation unit, execution unit, profile data storage unit and function selection unit are configured to operate repeatedly until reaching a predetermined level.

15. Computer-readable code which, when executed by a processor of a computer system, causes the computer system to profile a software application, comprising a plurality of functions including a main function with calls being made between functions in a hierarchical manner, by a process including the steps of:
(a) classifying each of the plurality of functions into one of a plurality of levels including at least a highest and a lowest level, according to its minimum number of call steps from the main function;
(b) starting with the highest level, defining a subset of the functions at the current level;
(c) adding or enabling profiling code in the subset of functions and executing the software application to produce profiling data;
(d) removing one or more of the functions from the subset on the basis of the profiling data;
(e) marking functions, called by the functions removed in step (d), as rejected functions; and
(f) until a predetermined level is reached, adding, to the reduced subset, functions from the next level below the current level other than rejected functions and then repeating steps (c), (d) and (e).

## Amended claims

### Amended claims in accordance with Rule 137(2) EPC.

**1.** A method of profiling a software application, the software application comprising a plurality of functions including a main function with calls being made between functions in a hierarchical manner, the method including the steps of:
(a) classifying each of the plurality of functions into one of a plurality of levels including at least a highest and a lowest level, according to its minimum number of call steps from the main function;
(b) starting with the highest level, defining a subset of the functions at the current level;
(c) adding profiling code to or enabling profiling code in the subset of functions and executing the software application to produce profiling data;
(d) reducing the subset by removing one or more of the functions on the basis of the profiling data;
(e) marking functions, called solely by the functions removed in step (d), as rejected functions; and
(f) until a predetermined level is reached, adding, to the reduced subset, functions from the next level below the current level other than rejected functions and repeating steps (c), (d) and (e).

**2.** The method according to claim 1, wherein step (a) further comprises determining a call graph of the plurality of functions, and step (d) further comprises deleting the removed functions and rejected functions from the call graph, so that the result after performing step (f) for the last time is an optimised profiling call graph.

**3.** The method according to claim 1 or 2 wherein the functions are in the form of compilable code.

**4.** The method according to claim 3 wherein step (c) adds the profiling code during or prior to a process of compiling each function.

**5.** The method according to claim 3 wherein step (c) enables profiling code already provided for the functions.

**6.** The method according to any preceding claim further comprising a step, prior to step (a), of selecting a profiling metric and executing the software application without profiling code to establish a baseline value of the selected metric.

**7.** The method according to claim 6 wherein step (d) involves removing functions on the basis of whether or not the associated profiling data fulfils a predetermined condition with respect to the profiling metric.

**8.** The method according to claim 7 wherein step (d) involves ranking the profiled functions in accordance with the profiling metric, and the predetermined condition is a given fraction of the baseline value.

**9.** The method according to claim 8 wherein the metric is at least one of execution time, memory, disk usage and a metric based on hardware counters.

**10.** The method according to any preceding claim wherein the predetermined level is the lowest level.

**11.** The method according to any of claims 1 to 9 wherein the predetermined level is one at which a target number or fraction of functions has been rejected or removed.

**12.** The method according to claim 2, or any claim as dependent on claim 2, further comprising a step of displaying the optimised call graph to a user.

**13.** The method according to any preceding claim further comprising a step of optimising code of the functions contained in the subset obtained when the predetermined level is reached.

**14.** An apparatus for automatically profiling a software application, the software application comprising a plurality of functions including a main function with calls being made between functions in a hierarchical manner, the apparatus including:
a code analysis unit arranged to classify each of the plurality of functions into one of a plurality of levels including at least a highest and a lowest level, according to its minimum number of call steps from the main function;
a function storage unit arranged to record a subset of the functions at the current level;
an instrumentation unit arranged to add or enable profiling code for each of the subset of functions;
an execution unit arranged to executing the software application to produce profiling data;
a profile data storage unit for holding profiling data generated by the execution unit;
a function selection unit arranged for instructing the function storage unit to delete functions on the basis of the profiling data, and to record functions from the next level below the current level except for any such functions called solely by functions just deleted;
wherein the instrumentation unit, execution unit, profile data storage unit and function selection unit are configured to operate repeatedly until reaching a predetermined level.

**15.** Computer-readable code which, when executed by a processor of a computer system, causes the computer system to profile a software application, comprising a plurality of functions including a main function with calls being made between functions in a hierarchical manner, by a process including the steps of:
(a) classifying each of the plurality of functions into one of a plurality of levels including at least a highest and a lowest level, according to its minimum number of call steps from the main function;
(b) starting with the highest level, defining a subset of the functions at the current level;
(c) adding or enabling profiling code in the subset of functions and executing the software application to produce profiling data;
(d) removing one or more of the functions from the subset on the basis of the profiling data;
(e) marking functions, called solely by the functions removed in step (d), as rejected functions; and
(f) until a predetermined level is reached, adding, to the reduced subset, functions from the next level below the current level other than rejected functions and then repeating steps (c), (d) and (e).
